# EUROPEAN PATENT SPECIFICATION

(11) **EP 2 639 854 B1**
(45) Date of publication and mention of the grant of the patent: **06.05.2020**
(21) Application number: 13157294.3
(22) Date of filing: 28.02.2013
(51) Int. Cl.: H01M 2/14, H01M 2/16

(54) **Separator for lithium secondary battery**
Abscheider für Lithiumsekundärbatterie
Séparateur pour batterie secondaire au lithium

(30) Priority: 16.03.2012 US 201261611830 P; 22.10.2012 US 201213657583
(43) Date of publication of application: 18.09.2013
(73) Proprietor: SAMSUNG SDI CO., LTD., Yongin-si, Gyeonggi-do (KR)
(72) Inventor: Song, Keun-Won, Gyeonggi-do (KR); Hwang, Duck-Chul, Gyeonggi-do (KR); Lee, Yong-Beom, Gyeonggi-do (KR); Ha, Jeong-Ki, Gyeonggi-do (KR)
(74) Representative: Mounteney, Simon James

(56) References cited:
- EP-A1- 1 955 756
- WO-A1-00/64992
- WO-A1-2004/021477
- WO-A1-2005/038959
- WO-A2-03/073534
- WO-A2-2004/021499
- WO-A2-2004/049471
- JP-A- 2000 080 187
- JP-A- 2007 311 151
- US-A1- 2001 056 157
- US-A1- 2011 003 209

## Description

### BACKGROUND OF THE INVENTION

### (a) Field of the Invention

A separator for a lithium secondary battery is disclosed.

### (b) Description of the Related Art

A conventional non-aqueous lithium secondary battery includes a separator made of a porous insulating film and interposed between positive and negative electrodes, and the pores of the film are impregnated by an electrolyte solution including a lithium salt dissolved therein. The non-aqueous lithium secondary battery has excellent high-capacity and high energy density characteristics. However, when the positive and negative electrodes therein are repetitively contracted and expanded during the charge and discharge cycles and thus, react with a separator or an electrolyte solution, the non-aqueous lithium secondary battery may be easily deteriorated, have internal and external short circuits, and rapidly become hot. When the battery rapidly becomes hot as aforementioned, the separator is fused and rapidly contracted or destroyed and thus, short-circuited again.

In order to prevent this problem, a conventional separator is widely formed of a porous polyethylene film having excellent shutdown characteristic, easy handling, and low cost. Herein, the shutdown indicates that a separator is partly fused and thus, closes pores and cuts off a current, when a battery is heated up due to overcharge, external or internal short circuit, and the like.

In addition, an attempt has been made to improve safety of the non-aqueous lithium secondary battery by improving heat resistance of an electrode material for a separator and the like and in particular, to secure safety even when a separator therein is sharply contracted or destroyed.

JP2007311151 relates to a porous separator for a battery. The separator contains inorganic fine particles and a binder.

### SUMMARY OF THE INVENTION

One embodiment of the present invention provides a separator being capable of improving cycle-life characteristics, strength, and high temperature stability of a lithium secondary battery.

The present invention provides a separator for a lithium secondary battery as defined in any of claims 1 to 8 and a battery comprising said separator as defined in claim 9. According to an embodiment of the present application, provided is a separator for a lithium secondary battery comprising:
a substrate;
a coating layer disposed on at least surface of the substrate, wherein the coating layer comprises at least one metal oxide and/or at least one silicon oxide coated with at least one silane compound.

According to an embodiment of the present application, provided is a separator for a lithium secondary battery that includes a coating layer including an silane compound having a reactive functional group and an inorganic compound, wherein the reactive functional group includes one selected from the group consisting of an amino group, an isocyanate group, an epoxy group, a mercapto group, and a combination thereof.

In an embodiment of the present invention the silane compound may form a surface coating layer for coating the surface of the inorganic compound.

In an embodiment of the present invention the surface coating may preferably be continuous or discontinuous.

In an embodiment of the present invention the at least one silane compound comprises at least one substituent capable of reacting with a binder.

In an embodiment of the present invention the least one silane compound has the formula: SiR₄₋ₙXₙ, wherein n is from 1 to 3, each R is independently a C₁₋₂₀ alkyl group, a C₁₋₂₀ alkoxy group, an acetoxy group, a vinyl group or a halogen atom with the proviso that at least one R is a C₁₋₂₀ alkoxy group, an acetoxy group or a halogen atom, and each X is independently a C₁₋₂₀ alkyl group, a C₂₋₂₀ alkenyl group, a C₂₋₂₀ alkynyl group, a C₁₋₂₀ haloalkyl group, a C₁₋₂₀ alkoxy group, a C₆₋₂₄ aryl group, a C₆₋₂₅ aralkyl group, a C₅₋₂₀ heteroaromatic group, a C₃₋₂₀ cycloalkyl group or a C₄₋₂₀ alklycycloalkyl group, each X is independently substituted with a reactive substituent.

In an embodiment of the present invention the reactive substituent is selected from the group consisting of an amino group, an isocyanate group, an epoxy group and a combination thereof.

In an embodiment of the present invention the at least one silane compound is selected from the group consisting of the group consisting of alkylalkoxysilane, vinylalkylalkoxysilane, halogenated alkylalkoxysilane, vinylhalosilane, vinylalkylhalosilane, and alkylacetoxysilane, and a combination thereof, substituted with the reactive substituent as defined above.

In an embodiment of the present invention the silane compound may preferably include one selected from alkylalkoxysilane, vinylalkylalkoxysilane, halogenated alkylalkoxysilane, vinylhalosilane, vinylalkylhalosilane alkylacyloxysilane, and a combination thereof that have a reactive functional group capable of reacting with a binder selected from an amino group, an isocyanate group, an epoxy group, a mercapto group, and a combination thereof.

In an embodiment of the present invention the inorganic compound may preferably include at least one metal oxide and/or at least one silicon oxide, preferably it is selected from the group consisting of SrTiO₃, SnO₂, CeO₂, MgO, NiO, CaO, ZnO, ZrO₂, Y₂O₃, Al₂O₃, TiO₂, BaTiO₃, SiO₂, and a combination thereof.

In an embodiment of the present application, the coating layer may preferably further include a binder selected from polyvinylidenefluoride (PVdF), poly(vinylidene-hexafluoropropylene) (P(VdF-HFP)), polyethyleneoxide (PEO), polyacrylonitrile (PAN), polyimide (PI), polyamic acid (PAA), polyamideimide (PAI), aramid, polyvinylacetate (PVA), polymethylmetacrylate (PMMA), polyvinylether (PVE), and a combination thereof.

In an embodiment of the present invention the separator may preferably include a porous substrate including one selected from glass fiber, polyester, TEFLON (tetrafluoroethylne), polyolefin, polytetrafluoroethylene (PTFE), and a combination thereof.

In an embodiment of the present invention the coating layer may preferably be formed on one side or both sides of the porous substrate.

In an embodiment of the present invention the coating layer of the separator may preferably include about 1 part by weight to about 20 parts by weight of the silane compound, preferably having a reactive functional group, based on 100 parts by weight of the inorganic compound, preferably about 5 to about 15 parts by weight of the silane compound.

In an embodiment of the present invention the coating layer of the separator may preferably include the inorganic compound and the binder in a weight ratio of between about 1.0:0.05 and 1.0:5.0, preferably 1.0:0.1 and 1.0:2.0, preferably 1.0:0.15 and 1.0:0.5.

The lithium secondary battery including the separator may have excellent cycle-life characteristic, strength, and high temperature stability.

### BRIEF DESCRIPTION OF THE DRAWING

FIG. 1 is a schematic view showing a lithium secondary battery including a separator according to one embodiment of the present invention.
Fig. 2 is a graph showing the changes in the cell capacity and the cell thickness in charge/discharge cycle tests for the lithium secondary battery including a separator of Example 1 and for the lithium secondary battery including a separator of Comparative Example.
Fig. 3 is a graph showing the AC IR changes in charge/discharge cycle tests for the lithium secondary battery including a separator of Example 1 and for the lithium secondary battery including a separator of Comparative Example.
Fig. 4 is a set of photographic images of the batteries including the separator of Comparative Example after the penetration tests.
Fig. 5 is a set of photographic images of the batteries including the separator of Example 1 after the penetration tests.

### DETAILED DESCRIPTION

Embodiments will hereinafter be described in detail. However, these embodiments are exemplary, and this disclosure is not limited thereto.

According to an embodiment of the present application, provided is a separator for a lithium secondary battery comprising:
a substrate;
a coating layer disposed on at least surface of the substrate, wherein the coating layer comprises at least one metal oxide and/or at least one silicon oxide coated with at least one silane compound.

In an embodiment of the present invention the at least one silane compound comprises at least one reactive substituent selected from the group consisting of an amino group, an isocyanate group, an epoxy group and a combination thereof. In an embodiment of the present invention, the at least one reactive substituent may react with a binder.

According to one embodiment of the present invention, a separator for a lithium secondary battery includes an coating layer including an silane compound having a reactive functional group and an inorganic compound, wherein the reactive functional group includes one selected from the group consisting of an amino group, an isocyanate group, an epoxy group, a mercapto group, and a combination thereof.

The separator may improve heat resistance by including the inorganic compound, and simultaneously the heat resistance is enhanced by including the silane compound optionally having a reactive functional group. The silane compound may provide more adherence to an electrode contacting the separator.

According to an embodiment, the inorganic compound may be coated with the silane compound having a reactive functional group. The silane compound and the inorganic compound may preferably form a chemical bond, and thus, the silane compound may preferably coat the surface of the inorganic compound to form a surface coating layer of the inorganic compound.

In an embodiment of the present invention the surface coating layer of the inorganic compound that is formed by the silane compound may preferably be a continuous layer or a discontinuous layer.

The inorganic compound whose surface is treated with the silane compound as described above is dispersed well in an organic solvent during a preparation of slurry because the surface of an inorganic material is treated with an organic material, preventing the inorganic compound from being agglomerated. To form a coating layer of the separator, a coating composition may preferably be formed, for example, by mixing the silane compound and the inorganic compound with a binder and an organic solvent, and the coating layer is formed by applying the coating composition with a substrate. Herein, since the surface of the inorganic compound is treated with the silane compound in the coating composition, coating processibility of the coating composition, such as solution preparation stability and coating speed, may be greatly improved. Also, since the coating layer formed of the coating composition has uniform coating surface and the inorganic compound is not agglomerated, when it is applied to the manufacturing of a battery, lithium precipitation and/or deformation may be prevented.

Meanwhile, the coating layer including the inorganic compound whose surface is treated with a silane compound comes to have an increased adhesion among the inorganic compound, thermal stability is improved. Also, in an embodiment of the present invention, since the coating layer may preferably further include a binder as described in the preparation of the coating composition, and the inorganic compound whose surface is treated with the silane compound may form a chemical bond with the binder, the adhesion may be enhanced.

The inorganic compound may preferably include at least one metal oxide and/or at least one silicon oxide, preferably at least one selected from SrTiO₃, SnO₂, CeO₂, MgO, NiO, CaO, ZnO, ZrO₂, Y₂O₃, Al₂O₃, TiO₂, BaTiO₃, SiO₂, and a combination thereof.

In an embodiment of the present invention the least one silane compound has the formula: SiR₄₋ₙXₙ, wherein n is from 1 to 3, each R is independently a C₁₋₂₀ alkyl group, a C₁₋₂₀ alkoxy group, an acetoxy group, a vinyl group or a halogen atom with the proviso that at least one R is a C₁₋₂₀ alkoxy group, an acetoxy group or a halogen atom, and each X is independentlya C₁₋₂₀ alkyl group, a C₂₋₂₀ alkenyl group, a C₂₋₂₀alkynyl group, a C₁₋₂₀ haloalkyl group, a C₁₋₂₀ alkoxy group, a C₆₋₂₄ aryl group, a C₆₋₂₅ aralkyl group, a C₅₋₂₀ heteroaromatic group, a C₃₋₂₀ cycloalkyl group or a C₄₋₂₀ alklycycloalkyl group, which is substituted with at least one reactive substituent selected from an amino group, an isocyanate group, an epoxy group, a mercapto group, and a combination thereof.

In an embodiment of the present invention, n is preferably 1 or 2, most preferably n is 1.

In an embodiment of the present invention, each R is independently a C₁₋₁₀ alkyl group, a C₁₋₁₀ alkoxy group, an acetoxy group, a vinyl group or a halogen atom (e.g. Cl, F or Br, preferably F or Cl) with the proviso that at least one R is a C₁₋₁₀ alkoxy group an acetoxy group or a halogen atom.

In an embodiment of the present invention, each X independently comprises a C₁₋₂₀ alkyl group, a C₂₋₂₀ alkenyl group, a C₂₋₂₀ alkynyl group, a C₁₋₂₀ haloalkyl group, a C₁₋₂₀ alkoxy group, a C₆₋₂₄ aryl group, a C₆₋₂₅ aralkyl group, a C₅₋₂₀ heteroaromatic group, a C₃₋₂₀ cycloalkyl group or a C₄₋₂₀ alklycycloalkyl group substituted with at least one reactive substituent.

In a preferred embodiment of the present invention each X independently comprises a C₁₋₁₀ alkyl group, a C₂₋₁₀ alkenyl group, a C₂₋₁₀alkynyl group, a C₁₋₁₀ haloalkyl group, a C₁₋₁₀ alkoxy group, a C₃₋₁₀ cycloalkyl group or a C₅₋₁₀ alklycycloalkyl group, more preferably each X is independently selected from a C₁₋₇ alkyl group or a C₂₋₇ alkenyl group, most preferably each X independently comprises a C₁₋₅ alkyl group, wherein the above groups are substituted with at least one reactive substituent.

The substituent is capable of reacting with a binder present in the separator and/or an electrode. The substituent present in at least one X group of the silane compound may include at least one reactive group selected from an amino group, an isocyanate group, an epoxy group, and a combination thereof.

In preferred embodiments of the present invention the amino group is a C₀₋₁₅N₁₋₅ amino group, preferably a C₀₋₁₀N₁₋₃ or a C₀₋₅N₁₋₂ amino group, for example a -NH₂ group, a -N(Me)H group a diethylenetriamino group, or a (2-aminoethyl)-3-amino group.

In preferred embodiments of the present invention the epoxy group is selected from the group consisting of an unsubstituted epoxy group; C₁₋₁₀ alkoxy epoxy group, preferably a C₁₋₅ alkoxy epoxy group, preferably a glycidoxy group; or a C₅₋₁₅ cycloalkyl epoxy group, preferably a C₅₋₁₀ cycloalkyl epoxy group, preferably an epoxycyclohexyl group.

In preferred embodiments of the present application, the mercapto group is a -SH group, a -S-S-C₁₋₁₀ group, or a -S-S-S-S- compound where each "-S-S-" group is part of a substituent X.

In preferred embodiments of the present invention, X is a C₁₋₅ alkyl group substituted with at least one of the preferred amino or epoxy groups defined above or an isocyanate group.

In an embodiment of the present invention the silane compound having a reactive functional group may preferably be alkylalkoxysilane having the, preferably reactive, functional group selected from an amino group, an isocyanate group, an epoxy group, and a combination thereof.

For example, the alkylalkoxysilane having the reactive, functional group selected from an amino group, an isocyanate group, an epoxy group, and a combination thereof may preferably include at least one selected from, for example, epoxyalkylalkoxysilane such as 3-glycidoxypropyltrimethoxysilane, 3-glycidoxypropyltriethoxysilane, 2-(3,4-epoxycyclohexyl)ethyltrimethoxysilane, 3-glycidoxypropylmethyldiethoxysilane, and the like; aminoalkylalkoxysilane such as 3-aminopropyltriethoxysilane, (3-trimethoxysilylpropyl)diethylenetriamine, (2-aminoethyl)-3-aminopropyltrimethoxysilane, N-methylaminopropyltrimethoxysilane, and the like; isocyanato alkylalkoxysilane such as 3-(triethoxysilyl)propyl isocyanate, 3-(trimethoxysilyl)propyl isocyanate, and the like; mercapto alkylalkoxysilane such as 3-mercaptopropyltrimethoxysilane, bis(3-(triethoxysilyl)propyl)-tetrasulfide, and the like; and combination thereof, but is not limited thereto.

In an embodiment of the present invention the silane compound having a reactive functional group, may preferably be also a silane compound selected from vinylalkylalkoxysilane, halogenated alkylalkoxysilane, vinylhalosilane, vinylalkylhalosilane, and alkylacetoxysilane, and a combination thereof, substituted with a reactive functional group selected from an amino group, an isocyanate group, an epoxy group, a mercapto group, and a combination thereof. Examples of vinylalkylalkoxysilane may preferably include vinylethyldi(2-methoxy ethoxy) silane, 3-methacryloxylethyldimethoxysilane, and the like; examples of halogenated alkylalkoxysilane may preferably include 3-chloropropyltrimethoxysilane, and the like; examples of vinylalkylhalosilane may preferably include vinylethyldichlorosilane, and the like; and examples of alkylacetoxysilane may preferably include methyltriacetoxysilane, and the like.

In an embodiment of the present invention the separator contains between 1 and 5 of the above-defined silane compounds, preferably between 1 and 3, most preferably a mixture of 2 of the above-defined silanes or just one silane compound.

In an embodiment of the present invention the inorganic compound, preferably at least one metal oxide or at least one silicon oxide, may preferably be mixed with a binder in the form of particles to form a coating layer for the separator, and it may form a layer prepared through a conventional method, for example, by preparing a resin composition solution including the inorganic compound and a binder and coating at least one side of the separator substrate with the resin composition solution. The inorganic compound particles may preferably have, for example, an average particle diameter ranging from about 0.05 to about 2 µm.

The binder may enhance the adherence for an electrode contacting a separator.

In an embodiment of the present invention, any of the binders for the separator and/or the electrodes may have a reactive functional group that can react with the silane compound, preferably react with the at least one subsituent optionally present on at least one X group, preferably react with at least one of a substituent selected from an amino group, an isocyanate group and an epoxy group.

In embodiments of the invention, any of the binders for the separator and the electrodes may inherently contain said reactive functional group or may be modified to have a reactive functional group that can react with the silane compound.

Examples of functional groups present in the binder that may react with the silane compound include a -COOH group, a -OH group and the like.

The binder may preferably include a polymeric material, for example, polyvinylidenefluoride (PVdF), poly(vinylidene-hexafluoropropylene) (P(VdF-HFP)), polyethyleneoxide (PEO), polyacrylonitrile (PAN), polyimide (PI), polyamic acid (PAA), polyamideimide (PAI), aramid, polyvinylacetate (PVA), polymethylmethacrylate (PMMA), polyvinylether (PVE), and a combination thereof may be used in preferred embodiments of the present invention, but is not limited thereto.

In an embodiment of the present invention, the binder used in may be modified to introduce a component that contains a -COOH group. In preferred embodiments of the present invention the binder comprises PVdF or P(VdF-HFP) modified to contain a -COOH.

The coating layer of the separator may preferably include the inorganic compound, preferably an oxide component as defined above, and the binder in a weight ratio ranging from about 1.0:0.05 to about 1.0:5.0, preferably 1.0:0.1 to 1.0:2.0, more preferably 1.0:0.15 to 1.0:0.5.. When the coating layer of the separator includes an inorganic compound and the binder within the ratio range, it may increase heat resistance of the separator due to the inorganic compound and be more uniform, thus improving battery safety.

The coating layer of the separator may preferably include about 1 to about 20 parts by weight of the silane compound having a reactive functional group based on 100 parts by weight of the inorganic compound, more preferably about 5 to about 15 parts by weight based on 100 parts by weight of the inorganic compound. When the coating layer of the separator includes the silane compound having a reactive functional group within the composition ratio range, a side reaction and wastage of unreacted silane caused by excessive addition of the silane compound may be reduced while enhancing the adhesiveness inside the coating layer obtained by coating the surface of the inorganic compound with the silane compound.

A thickness of the coating layer has an influence on thickness of a separator and thus, may be adjusted depending on the thickness of the separator. A thinner separator may decrease cell resistance and increase capacity but deteriorate safety. Accordingly, the coating layer may preferably have a thickness appropriately adjusted depending on a desired purpose, for example, a thickness ranging from about 0.5 µm to about 5 µm.

The separator may have a thickness determined depending on desired capacity of a battery. For example, the separator may preferably have a thickness ranging from about 10 to about 30 µm.

The separator may preferably include a porous substrate including one selected from glass fiber, polyester, TEFLON (tetrafluoroethylne), polyolefin, polytetrafluoroethylene (PTFE), and a combination thereof. For example, the substrate may preferably include polyolefin such as polyethylene, polypropylene, and the like and may preferably be formed of more than two layers, for example, a multilayer such as a polyethylene/polypropylene separator, a polyethylene/polypropylene/polyethylene separator, a polypropylene/polyethylene/polypropylene separator, and the like. The separator may accomplish excellent heat resistance, even when a single layer rather than a relatively thick multilayered substrate having bad capacity is used.

The coating layer of the separator may preferably be formed on one side or both sides of the porous substrate. For example, when the coating layer of the separator is formed on one side of the porous substrate, the coating layer may contact with a positive electrode or a negative electrode.

After a lithium secondary battery is manufactured by inserting the separator including the coating layer between the positive electrode and the negative electrode, a network of the inorganic compound may be formed by implanting an electrolyte solution and performing a heat treatment to cause a reaction between the reactive functional group. The heat treatment may be, for example, performed through heat press. The heat treatment may be performed at about 80° C to about 110° C for about 30 seconds to about 150 seconds with a force ranging from about 100 Kgf to about 300 Kgf. Adherence between the separator and the electrodes may be improved by applying pressure during the heat treatment.

The lithium secondary battery may be classified into lithium ion batteries, lithium ion polymer batteries, and lithium polymer batteries according to the presence of a separator and the kind of electrolyte used in the battery. The lithium secondary batteries may have a variety of shapes and sizes and thus, include cylindrical, prismatic, or coin-type batteries and also, may be thin film batteries or rather bulky batteries in size. Structures and fabrication methods for lithium ion batteries are well known in the art.

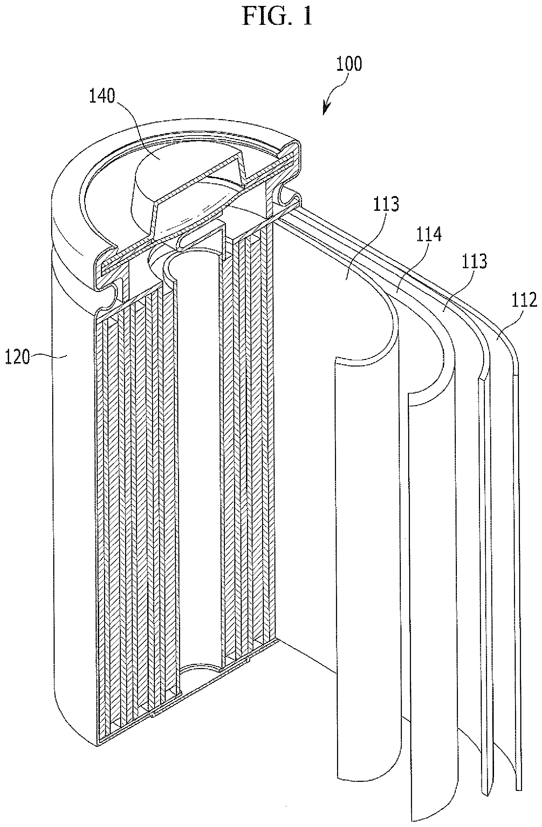

FIG. 1 is an exploded perspective view showing a lithium secondary battery including the separator in accordance with an embodiment. Referring to FIG. 1, the lithium secondary battery 100 is a cylindrical battery that includes a negative electrode 112, a positive electrode 114, a separator 113 disposed between the positive electrode 114 and the negative electrode 112, an electrolyte (not shown) impregnated in the negative electrode 112, the positive electrode 114, and the separator 113, a battery case 120, and a sealing member 140 sealing the battery case 120. The lithium secondary battery 100 is fabricated by sequentially stacking a negative electrode 112, a positive electrode 114, and a separator 113, and spiral-winding them and housing the wound product in the battery case 120.

The negative electrode includes a current collector and a negative active material layer formed on the current collector, and the negative active material layer includes a negative active material.

The negative active material includes a material that reversibly intercalates/deintercalates lithium ions, a lithium metal, a lithium metal alloy, a material being capable of doping lithium, or a transition metal oxide.

The material that reversibly intercalates/deintercalates lithium ions includes carbon materials. The carbon material may be any generally-used carbon-based negative active material in a lithium ion secondary battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon (carbon obtained by sintering at a high temperature), a mesophase pitch carbonized product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

Examples of the material being capable of doping and dedoping lithium include Si, SiOₓ (0 < x < 2), a Si-C composite, a Si-Q alloy (wherein Q is an element selected from the group consisting of an alkali metal, an alkaline-earth metal, Group 13 to 16 elements, a transition element, a rare earth element, and a combination thereof, and not Si), Sn, SnO₂, a Sn-C composite, a Sn-R alloy (wherein R is an element selected from the group consisting of an alkali metal, an alkaline-earth metal, Group 13 to 16 elements, a transition element, a rare earth element, and combinations thereof and is not Sn), and the like. The Q and R may be an element of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide include vanadium oxide, lithium vanadium oxide, and the like.

The negative active material layer may include a binder, and optionally a conductive material.

The binder improves binding properties of the negative active material particles to each other and to a current collector, and may include any of the binders defined above or polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may be a copper foil, a nickel foil, a stainless steel foil, a titanium foil, a nickel foam, a copper foam, a polymer substrate coated with a conductive metal, or combinations thereof.

The positive electrode includes a current collector and a positive active material layer disposed on the current collector.

The positive active material includes compounds (lithiated intercalation compounds) that reversibly intercalate and deintercalate lithium ions. The positive active material may include a composite oxide including at least one selected from the group consisting of cobalt, manganese, and nickel, as well as lithium. In particular, the following lithium-containing compounds may be used:
LiₐA_{1-b}R_{b}D₂ (wherein, in the above formula, 0.90 ≤ a ≤ 1.8 and 0 ≤ b ≤ 0.5); LiₐE_{1-b}R_{b}O_{2-c}D_{c} (wherein, in the above formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above formula, 0 ≤ b ≤ 0.5, 0 ≤ c ≤ 0.05); LiₐNi_{1-b-c}Co_{b}R_{c}D_{α} (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}CO_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above formula, 0.90 ≤ a ≤ 1.8 and 0.001 ≤ b ≤ 0.1); LiₐCoG_{b}O₂ (wherein, in the above formula, 0.90 ≤ a ≤ 1.8 and 0.001 ≤ b ≤ 0.1); LiₐMnG_{b}O₂ (wherein, in the above formula, 0.90 ≤ a ≤ 1.8 and 0.001 ≤ b ≤ 0.1); LiₐMn₂G_{b}O₄ (wherein, in the above formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃(0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The compound can have a coating layer on the surface, or can be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like, but is not illustrated in more detail, since it is well-known to those who work in the related field.

The positive active material layer may include a binder and a conductive material.

The binder improves binding properties of the positive active material particles to each other and to a current collector. Examples of the binder may include any of the binders defined above or polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent unless it causes a chemical change. For example, it may include natural graphite, artificial graphite, carbon black, acetylene black, ketjen black, carbon fiber, metal powder, metal fiber or the like such as copper, nickel, aluminum, silver or the like, or one or at least one kind mixture of conductive material such as polyphenylene derivative or the like.

The current collector may be Al, but is not limited thereto.

The negative and positive electrodes may be fabricated by a method including mixing the active material, a conductive material, and a binder into an active material composition, and coating the composition on a current collector, respectively. The electrode-manufacturing method is well known, and thus is not described in detail in the present specification. The solvent may include N-methylpyrrolidone and the like but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), or the like, and Examples of the ester-based solvent may include methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone, or the like. Examples of the alcohol-based solvent include ethyl alcohol, isopropyl alcohol, and the like, and examples of the aprotic solvent include nitriles such as R-CN (wherein R is a C2 to C20 linear, branched, or cyclic hydrocarbon group including a double bond, an aromatic ring, or an ether bond), amides such as dimethylformamide, dioxolanes such as 1,3-dioxolane, sulfolanes, or the like.

The non-aqueous organic solvent may be used singularly or in a mixture. When the organic solvent is used in a mixture, the mixture ratio may be controlled in accordance with a desirable battery performance, which may be understood by the person skilled in the related art.

The carbonate-based solvent is prepared by mixing a cyclic carbonate and a linear carbonate. The cyclic carbonate and the linear carbonate are mixed together in the volume ratio of about 1:1 to about 1:9. Within this range, performance of electrolyte may be improved.

The non-aqueous organic electrolyte may be further prepared by mixing a carbonate-based solvent with an aromatic hydrocarbon-based solvent. The carbonate-based and the aromatic hydrocarbon-based solvents may be mixed together in a volume ratio ranging from about 1:1 to about 30:1.

The aromatic hydrocarbon-based organic solvent may be represented by the following Chemical Formula 1.

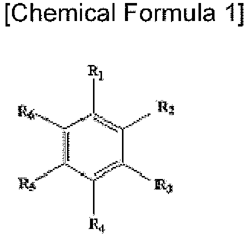

In Chemical Formula 1, R₁ to R₆ are each independently hydrogen, a halogen, a C1 to C10 alkyl group, a C1 to C10 haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate, an ethylene carbonate-based compound represented by the following Chemical Formula 2, or a combination thereof to improve cycle-life.

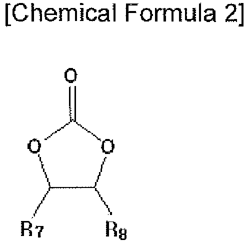

In Chemical Formula 2, R₇ and R₈ are independently selected from hydrogen, hydrogen, a halogen, a cyano group (CN), a nitro group (NO₂), and a C1 to C5 fluoroalkyl group, provided that at least one of R₇ and R₈ is selected from a halogen, a cyano group (CN), a nitro group (NO₂), and a C1 to C5 fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle life may be adjusted within an appropriate range.

The lithium salt is dissolved in an organic solvent, supplies a battery with lithium ions, operates a basic operation of the lithium secondary battery, and improves lithium ion transportation between positive and negative electrodes therein. Examples of the lithium salt include LiPF₆, LiBF₄, LiSbF₆, LiAsF₆, LiC₄F₉SO₃, LiClO₄, LiAlO_{2.} LiAlCl₄, LiN(CₓF₂ₓ₊₁SO₂)(C_{y}F_{2y+1}SO₂) (where x and y are natural numbers), LiCl, Lil, LiB(C₂O₄)₂ (lithium bis(oxalato) borate, LiBOB), or a combination thereof, as a supporting electrolytic salt. The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a negative electrode 112 from a positive electrode 114 and provides a transporting passage of lithium ion, which is the same as described above.

The following examples illustrate the present invention in more detail. These examples, however, should not in any sense be interpreted as limiting the scope of the present invention.

### (Example)

### (Manufacturing of separator including coating layer)

### Examples 1 to 3

25g of alumina was added to 75g of acetone followed by agitating. Then, 2.5g of an additive provided in the following Table 1 was added to the mixture of 75g of acetone and 25g of alumina, and the resulting mixture was agitated (solution 1). The additive reacted with alumina during the agitation and coated on the surface of the alumina.

A polymer solution was prepared by adding 5g of a binder as set forth Table 1 to to 45g of acetone and agitating them (solution 2).

The solutions 1 and 2 were mixed and agitated (solution 3).

The solution 3 was coated on both sides of a 9 µm-thick polyethylene (PE) separator. The coating layers were respectively 2 µm thick.

**[Table 1]**

| Example | additive | binder |
|---|---|---|
| 1 | 3-aminopropyltriethoxysilane | poly(vinylidene-hexafluoropropylene) (hereinafter, (PVDF-HFP)) |
| 2 | 3-glycidoxypropyltriethoxysilane | (PVDF-HFP) |
| 3 | 3-(triethoxysilyl)propyl isocyanate) | (PVDF-HFP) |
| 4 | 3-aminopropyltriethoxysilane | (PVDF modified to have a COOH group) |
| 5 | 3-glycidoxypropyltriethoxysilane | (PVDF modified to have a COOH group) |
| 6 | 3-(triethoxysilyl)propyl isocyanate) | (PVDF modified to have a COOH group) |

| | | |
|---|---|---|
| * Examples 4,5 and 6 are according to the current invention. | | |

### (Fabrication of electrode)

(Positive electrode) LiCoO₂ as a positive active material, a PVDF-based binder, and Super-P as a conductive material in a mass ratio of 94/3/3 were mixed in NMP(N-methyl-2-pyrrolidone) as a solvent to prepare slurry, and the slurry was coated on a 12 µm-thick aluminum current collector. The coated product was dried and compressed, fabricating a positive electrode.

The PVDF-based binder was prepared by mixing a binder including only a PVDF component and a PVDF-based binder including a COOH component.

(Negative electrode) Graphite as a negative active material, a styrene-butadiene rubber (SBR) as a binder, and CMC (carboxylmethyl cellulose) in a mass ratio of 98/1/1 were mixed in water as a solvent to prepare slurry, and the slurry was coated on a 12 µm-thick copper current collector.

The coated product was dried and compressed, fabricating a negative electrode like the positive electrode.

The positive electrode, negative electrode, and separators according to Examples 1 to 6 were used to fabricate pouch-type battery cells 423380, respectively. Herein, an electrolyte solution was prepared by mixing EC (ethyl carbonate)/EMC (ethylmethyl carbonate)/DEC (diethyl carbonate) in a volume ratio of 3/5/2 and dissolving 1.3M LiPF₆ therein.

The electrolyte solution was injected into the cells, and the cells were pressed with 200Kgf of a pressure at 100° C for 100 seconds.

### Comparative Example

A separator is prepared in the same manner as set forth in Example 1 except that no additive is included therein.

### Experimental Example 1: Measurement of cell capacity and a thickness change with an increase in the number of cycles during a high temperature life cycle test at 45°C

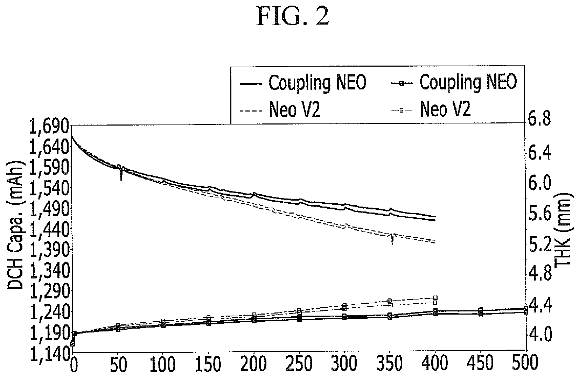

A battery is fabricated using a separator of Example 1, and positive and negative electrodes prepared in the manner as set forth above, and is denoted as Coupling NEO in FIGs. 2-3. For comparison, a battery is also fabricated using a separator of Comparative Example, and positive and negative electrodes prepared in the manner as set forth above, and is denoted as NEO V2 in FIGs. 2-3. These two batteries are subjected to a charge/discharge cycle test under the following conditions to measure changes in cell capacity and a thickness change thereof:
Charge: 0.7C, 4.3V
Discharge: 0.5C, 3.0V cut off
Rest time: 5 minutes

The results are shown in FIG. 2. As can be seen in FIG. 2, the battery, Coupling Neo, using the separator of Example 1, which comprises aminopropyl triethoxy silane as an additive, shows a smaller increase in its thickness and a higher capacity maintenance ratio than the battery, NEO V2, using the separator of Comparative Example.

In case of the battery of the present invention, the organic/inorganic bindable silane compound being included in the separator may react with the binder of the electrode, thereby contributing to an increase in adhesiveness between the electrode and the separator. In addition, when the organic/inorganic bindable silane compound reacts with the binder being used in the separator, it may contribute to increasing a molecular weight of binder polymer, thereby enhancing the adhesiveness of the binder itself. As a result, the gap between the electrode and the separator may decrease and, this may reduce chance for side reactions to occur in such gap and thereby prolong the battery life.

### Experimental Example 2: Measurement of an AC IR change in a Battery Cycle Test

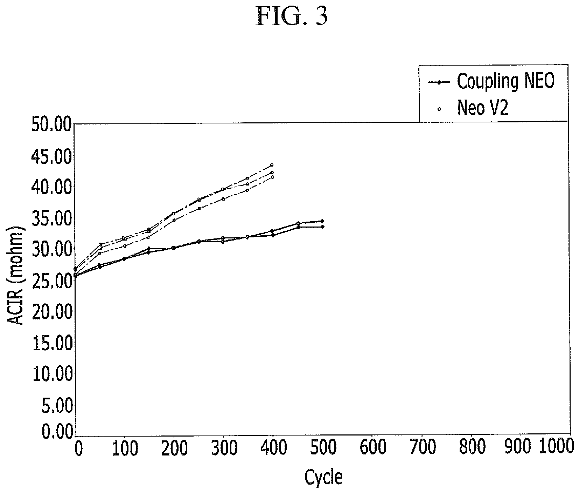

The increase rate of internal resistance of the battery is measured when the charge/discharge cycle test as described above for the batteries is carried out. The results are shown in FIG. 3. FIG. 3 confirms that as the number of charge/discharge cycles increases, the battery, Coupling NEO has a lower value of the increase rate of internal resistance of the battery than the battery of Comparative Example, NEO V2.

### Experimental Example 3: Penetration Test

A penetration test is conducted for the battery comprising the separator of Example 1 and the battery comprising the separator of Comparative Example, respectively. Conditions for penetration test are as follows: the battery is fully charged at 0.7C and 4.3V, and is left alone for 30 minutes. Then, an iron bar having a diameter of 2.5mm penetrates into the battery at a speed of 100 mm/s many times, and the voltage, the temperature, and the ignition of the battery are checked.

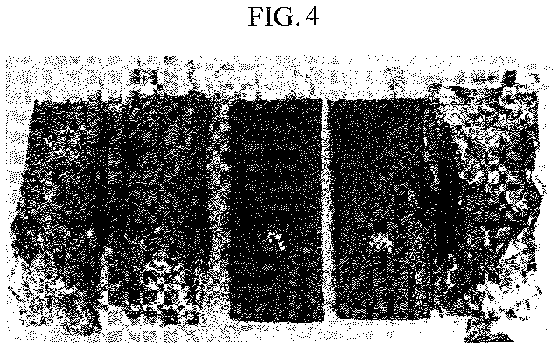

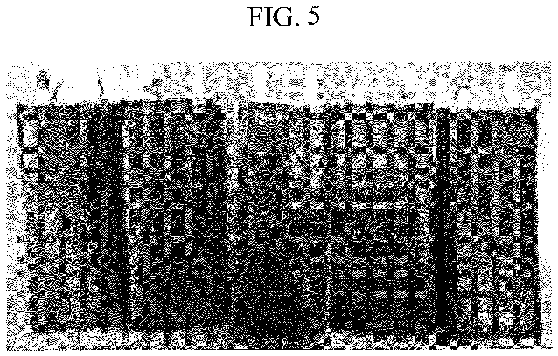

The test results for the battery of Comparative Example are shown in FIG. 4, showing that the penetration of the iron bar may cause a sharp and sudden increase in the battery temperature, leading to ignition of the battery of Comparative Example. By contrast, the test results for the battery of Example 1 are shown in FIG. 5, showing that it passes the penetration test without being ignited.

**<Description of symbols>**

| | | | |
|---|---|---|---|
| 100: | lithium secondary battery | 112: | negative electrode |
| 113: | separator | 114: | positive electrode |
| 120: | battery case | 140: | sealing member |

While this invention has been described in connection with what is presently considered to be practical embodiments, it is to be understood that the invention is not limited to the disclosed embodiments, but, on the contrary, is intended to cover various modifications included within the scope of the appended claims.

## Claims

1. A separator for a lithium secondary battery comprising:
a substrate;
a coating layer disposed on at least one surface of the substrate, wherein the coating layer comprises at least one metal oxide and/or at least one silicon oxide coated with at least one silane compound,
wherein the at least one metal oxide and the at least one silicon oxide are particles,
wherein the at least one silane compound has the formula: SiR₄₋ₙXₙ, wherein n is from 1 to 3, each R is independently a C₁₋₂₀ alkyl group, a C₁₋₂₀ alkoxy group, an acetoxy group, a vinyl group or a halogen atom with the proviso that at least one R is a C₁₋₂₀ alkoxy group, an acetoxy group or a halogen atom, and each X is independently a C₁₋₂₀ alkyl group, a C₂₋₂₀ alkenyl group, a C₂₋₂₀ alkynyl group, a C₁₋₂₀ haloalkyl group, a C₁₋₂₀ alkoxy group, a C₆₋₂₄ aryl group, a C₆₋₂₅ aralkyl group, a C₅₋₂₀ heteroaromatic group, a C₃₋₂₀ cycloalkyl group or a C₄₋₂₀ alklycycloalkyl group, and each X is independently substituted with a reactive substituent,
wherein the reactive substituent is selected from the group consisting of an amino group, an isocyanate group and an epoxy group and a combination thereof,
wherein the coating layer further comprises a binder, wherein the binder comprises polyvinylidenefluoride (PVdF) modified to contain a -COOH group, or poly(vinylidene-hexafluoropropylene) (P(VdF-HFP)) modified to contain a - COOH group;
wherein the sum of the metal oxide and the silicon oxide, and the binder are present in a weight ratio of between about 1.0:0.15 and 1.0:0.5; and
wherein the at least one of the reactive substituents of the silane compound reacts with the -COOH group contained in the binder.

2. The separator for a lithium secondary battery of claim 1, wherein the at least one metal oxide is contains at least one of an alkali metal, an alkaline earth metal, a transition metal or a lanthanide or combinations thereof, preferably the at least one metal oxide is selected from the group consisting of SrTiO₃, SnO₂, CeO₂, MgO, NiO, CaO, ZnO, ZrO₂, Y₂O₃, Al₂O₃, TiO₂, and BaTiO₃, and a combination thereof.

3. The separator for a lithium secondary battery of any of claims 1 or claim 2, wherein the at least one silicon oxide is SiO₂.

4. The separator for a lithium secondary battery of any of claims 1 to 3, wherein the at least one silane compound is selected from the group consisting of alkylalkoxysilane, vinylalkylalkoxysilane, halogenated alkylalkoxysilane, vinylhalosilane, vinylalkylhalosilane, and alkylacetoxysilane, and a combination thereof, substituted with at least one substituent as defined in claim 1.

5. The separator for a lithium secondary battery of any of claims 1 to 4, wherein the reactive substituent of the silane compound is capable of reacting with a binder present in an electrode of a lithium secondary battery.

6. The separator for a lithium secondary battery of any of claims 1 to 5, wherein the silane compound is selected from the group consisting of an epoxyalkylalkoxysilane, an aminoalkylalkoxysilane, and an isocyanatoalkylalkoxysilane and a combination thereof.

7. The separator for a lithium secondary battery of any of claims 1 to 6, wherein the silane compound is selected from the group consisting of 3-glycidoxypropyltrimethoxysilane, 3-glycidoxypropyltriethoxysilane, 2-(3,4-epoxycyclohexyl)ethyltrimethoxysilane, 3-glycidoxypropylmethyldiethoxysilane, 3-aminopropyltriethoxysilane, (3-trimethoxysilylpropyl)diethylenetriamine, (2-aminoethyl)-3-aminopropyltrimethoxysilane, N-methylaminopropyltrimethoxysilane, 3-(triethoxysilyl)propyl isocyanate, 3-(trimethoxysilyl)propyl isocyanate, and bis(3-(triethoxysilyl)propyl)-tetrasulfide, and a combination thereof.

8. The separator for a lithium secondary battery of any of claims 1 to 7, wherein the weight ratio of the sum of the metal oxide and the silicon oxide to the silane compound is from about 1 to about 20 parts by weight of the silane compound based on 100 parts by weight of the sum of the metal oxide and the silicon oxide, preferably about 5 to about 15 parts by weight.

9. A battery comprising the separator of any of claims 1 to 8.

## Patentansprüche

1. Separator für eine Lithiumsekundärbatterie, umfassend:
ein Substrat;
eine Überzugsschicht, angeordnet auf mindestens einer Oberfläche des Substrats, wobei die Überzugsschicht mindestens ein Metalloxid und/oder mindestens ein Siliciumoxid, beschichtet mit mindestens einer Silanverbindung, umfasst,
wobei das mindestens eine Metalloxid und das mindestens eine Siliciumoxid Partikel sind,
wobei die mindestens eine Silanverbindung die Formel aufweist: SiR₄₋ₙXₙ, wobei n von 1 bis 3 beträgt, jedes R unabhängig ein C₁₋₂₀-Alkylrest, ein C₁₋₂₀-Alkoxyrest, eine Acetoxygruppe, eine Vinylgruppe oder ein Halogenatom ist, mit der Maßgabe, dass mindestens ein R ein C₁₋₂₀-Alkoxyrest, eine Acetoxygruppe oder ein Halogenatom ist, und jedes X unabhängig ein C₁₋₂₀-Alkylrest, ein C₂₋₂₀-Alkenylrest, ein C₂₋₂₀-Alkinylrest, ein C₁₋₂₀-Halogenalkylrest, ein C₁₋₂₀-Alkoxyrest, ein C₆₋₂₄-Arylrest, ein C₆₋₂₅-Aralkylrest, ein heteroaromatischer C₅₋₂₀-Rest, ein C₃₋₂₀-Cycloalkylrest oder ein C₄₋₂₀-Alkylcycloalkylrest ist, und jedes X unabhängig mit einem reaktiven Substituenten substituiert ist,
wobei der reaktive Substituent ausgewählt ist aus der Gruppe bestehend aus einer Aminogruppe, einer Isocyanatgruppe und einer Epoxygruppe und einer Kombination davon,
wobei die Überzugsschicht weiterhin ein Bindemittel umfasst, wobei das Bindemittel Polyvinylidenfluorid (PVDF), das modifiziert ist, um eine Gruppe -COOH zu enthalten, oder Poly(vinyliden-Hexafluorpropylen) (P(VDF-HFP)), das modifiziert ist, um eine Gruppe -COOH zu enthalten, umfasst;
wobei die Summe des Metalloxids und des Siliciumoxids und das Bindemittel in einem Gewichtsverhältnis von zwischen etwa 1,0:0,15 und 1,0:0,5 vorliegen; und
wobei der mindestens eine der reaktiven Substituenten der Silanverbindung mit der in dem Bindemittel enthaltenen Gruppe -COOH reagiert.

2. Separator für eine Lithiumsekundärbatterie nach Anspruch 1, wobei das mindestens eine Metalloxid mindestens eines von einem Alkalimetall, einem Erdalkalimetall, einem Übergangsmetall oder einem Lanthanoid oder Kombinationen davon enthält, das mindestens eine Metalloxid vorzugsweise ausgewählt ist aus der Gruppe bestehend aus SrTiO₃, SnO₂, CeO₂, MgO, NiO, CaO, ZnO, ZrO₂, Y₂O₃, Al₂O₃, TiO₂ und BaTiO₃, und einer Kombination davon.

3. Separator für eine Lithiumsekundärbatterie nach einem von Anspruch 1 oder Anspruch 2, wobei das mindestens eine Siliciumdioxid SiO₂ ist.

4. Separator für eine Lithiumsekundärbatterie nach einem der Ansprüche 1 bis 3, wobei die mindestens eine Silanverbindung ausgewählt ist aus der Gruppe bestehend aus Alkylalkoxysilan, Vinylalkylalkoxysilan, halogeniertem Alkylalkoxysilan, Vinylhalogensilan, Vinylalkylhalogensilan und Alkylacetoxysilan, und einer Kombination davon, substituiert mit mindestens einem Substituenten wie in Anspruch 1 definiert.

5. Separator für eine Lithiumsekundärbatterie nach einem der Ansprüche 1 bis 4, wobei der reaktive Substituent der Silanverbindung imstande ist, mit einem in einer Elektrode einer Lithiumsekundärbatterie vorhandenen Bindemittel zu reagieren.

6. Separator für eine Lithiumsekundärbatterie nach einem der Ansprüche 1 bis 5, wobei die Silanverbindung ausgewählt ist aus der Gruppe bestehend aus einem Epoxyalkylalkoxysilan, einem Aminoalkylalkoxysilan und einem Isocyanatoalkylalkoxysilan und einer Kombination davon.

7. Separator für eine Lithiumsekundärbatterie nach einem der Ansprüche 1 bis 6, wobei die Silanverbindung ausgewählt ist aus der Gruppe bestehend aus 3-Glycidoxypropyltrimethoxysilan, 3-Glycidoxypropyltriethoxysilan, 2-(3,4-Epoxycyclohexyl)ethyltrimethoxysilan, 3-Glycidoxypropylmethyldiethoxysilan, 3-Aminopropyltriethoxysilan, (3-Trimethoxysilylpropyl)diethylentriamin, (2-Aminoethyl)-3-aminopropyltrimethoxysilan, Methylaminopropyltrimethoxysilan, 3-(Triethoxysilyl)propylisocyanat, 3-(Trimethoxysilyl)propylisocyanat und Bis(3-(triethoxysilyl)propyl)-tetrasulfid, und einer Kombination davon.

8. Separator für eine Lithiumsekundärbatterie nach einem der Ansprüche 1 bis 7, wobei das Gewichtsverhältnis der Summe des Metalloxids und des Siliciumoxids zu der Silanverbindung von etwa 1 bis etwa 20 Gewichtsteil(e) der Silanverbindung, bezogen auf 100 Gewichtsteile der Summe des Metalloxids und des Siliciumoxids, vorzugsweise von etwa 5 bis etwa 15 Gewichtsteile, beträgt.

9. Batterie, umfassend den Separator nach einem der Ansprüche 1 bis 8.

## Revendications

1. Séparateur pour une batterie secondaire au lithium comprenant :
un substrat ;
une couche de revêtement disposée sur au moins une surface du substrat, où la couche de revêtement comprend au moins un oxyde métallique et/ou au moins un oxyde de silicium revêtu d'au moins un composé de silane,
dans lequel l'au moins un oxyde métallique et l'au moins un oxyde de silicium sont des particules,
dans lequel l'au moins un composé de silane répond à la formule : SiR₄₋ₙXₙ, dans laquelle n vaut de 1 à 3, chaque R est indépendamment un groupe alkyle en C₁ à C₂₀, un groupe alkoxy en C₁ à C₂₀, un groupe acétoxy, un groupe vinyle ou un atome d'halogène, sous réserve qu'au moins un R soit un groupe alkoxy en C₁ à C₂₀, un groupe acétoxy ou un atome d'halogène, et chaque X est indépendamment un groupe alkyle en C₁ à C₂₀, un groupe alcényle en C₂ à C₂₀, un groupe alcynyle en C₂ à C₂₀, un groupe halogénoalkyle en C₁ à C₂₀, un groupe alkoxy en C₁ à C₂₀, un groupe aryle en C₆ à C₂₄, un groupe aralkyle en C₆ à C₂₅, un groupe hétéroaromatique en C₅ à C₂₀, un groupe cycloalkyle en C₃ à C₂₀ ou un groupe alkylcycloalkyle en C₄ à C₂₀, et chaque X est indépendamment substitué par un substituant réactif,
dans lequel le substituant réactif est choisi dans l'ensemble constitué par un groupe amino, un groupe isocyanate et un groupe époxy et une combinaison de ceux-ci,
dans lequel la couche de revêtement comprend en outre un liant, où le liant comprend du poly(fluorure de vinylidène) (PVdF) modifié de manière à contenir un groupe -COOH, ou du poly(vinylidène-hexafluoropropylène) (P(VdF-HFP)) modifié de manière à contenir un groupe -COOH ;
dans lequel la somme de l'oxyde métallique et de l'oxyde de silicium, et le liant, sont présents en un rapport en poids compris entre environ 1,0:0,15 et 1,0:0,5 ; et
dans lequel l'au moins un des substituants réactifs du composé de silane réagit avec le groupe -COOH contenu dans le liant.

2. Séparateur pour une batterie secondaire au lithium selon la revendication 1, dans lequel l'au moins un oxyde métallique contient au moins l'un parmi un métal alcalin, un métal alcalino-terreux, un métal de transition et un lanthanide, ou des combinaisons de ceux-ci, de préférence l'au moins un oxyde métallique est choisi dans l'ensemble constitué par SrTiO₃, SnO₂, CeO₂, MgO, NiO, CaO, ZnO, ZrO₂, Y₂O₃, Al₂O₃, TiO₂ et BaTiO₃, et une combinaison de ceux-ci.

3. Séparateur pour une batterie secondaire au lithium selon l'une quelconque de la revendication 1 ou la revendication 2, dans lequel l'au moins un oxyde de silicium est SiO₂.

4. Séparateur pour une batterie secondaire au lithium selon l'une quelconque des revendications 1 à 3, dans lequel l'au moins un composé de silane est choisi dans l'ensemble constitué par un alkylalkoxysilane, un vinylalkylalkoxysilane, un alkylalkoxysilane halogéné, un vinyl-halogénosilane, un vinylalkylhalogénosilane, et un alkyl-acétoxysilane, et une combinaison de ceux-ci, substitué par au moins un substituant comme défini dans la revendication 1.

5. Séparateur pour une batterie secondaire au lithium selon l'une quelconque des revendications 1 à 4, dans lequel le substituant réactif du composé de silane est capable de réagir avec un liant présent dans une électrode d'une batterie secondaire au lithium.

6. Séparateur pour une batterie secondaire au lithium selon l'une quelconque des revendications 1 à 5, dans lequel le composé de silane est choisi dans l'ensemble constitué par un époxyalkylalkoxysilane, un aminoalkylalkoxysilane, et un isocyanatoalkylalkoxysilane, et une combinaison de ceux-ci.

7. Séparateur pour une batterie secondaire au lithium selon l'une quelconque des revendications 1 à 6, dans lequel le composé de silane est choisi dans l'ensemble constitué par le 3-glycidoxypropyltriméthoxysilane, le 3-glycidoxypropyltriéthoxysilane, le 2-(3,4-époxycyclohexyl)-éthyltriméthoxysilane, le 3-glycidoxypropylméthyldiéthoxysilane, le 3-aminopropyltriéthoxysilane, la (3-triméthoxysilylpropyl)diéthylènetriamine, le (2-aminoéthyl)-3-aminopropyltriméthoxysilane, le N-méthylaminopropyltriméthoxysilane, l'isocyanate de 3-(triéthoxysilyl)propyle, l'isocyanate de 3-(triméthoxysilyl)propyle, et le tétrasulfure de bis(3-(triéthoxysilyl)propyle, et une combinaison de ceux-ci.

8. Séparateur pour une batterie secondaire au lithium selon l'une quelconque des revendications 1 à 7, dans lequel le rapport en poids de la somme de l'oxyde métallique et de l'oxyde de silicium au composé de silane est d'environ 1 à environ 20 parties en poids du composé de silane pour 100 parties en poids de la somme de l'oxyde métallique et de l'oxyde de silicium, de préférence d'environ 5 à environ 15 parties en poids.

9. Batterie comprenant le séparateur de l'une quelconque des revendications 1 à 8.
